# EUROPEAN PATENT APPLICATION

(11) **EP 3 859 632 A1**
(43) Date of publication of application: **04.08.2021**
(21) Application number: 21153918.4
(22) Date of filing: 28.01.2021
(51) Int. Cl.: G06Q 10/08

(54) **INVENTORY MANAGEMENT SYSTEM**

(30) Priority: 28.01.2020 NL 2024771
(71) Applicant: Heineken Supply Chain B.V., 1017 ZD Amsterdam (NL)
(72) Inventor: STAMHUIS, Cornelis Theodoor, 3089 JW Rotterdam (NL)
(74) Representative: V.O.

(57) **Abstract**

A method is provided of configuring a sensor device for detecting stock in a shop gondola. The method comprises operating a sensor local wireless network module comprised by the sensor device, receiving, through the sensor's local wireless network module, shop network details for connecting to a shop local wireless network module and connecting to the shop local wireless network module using the shop network details. The method further comprises connecting, through the shop local wireless network module, to a wide area network, retrieving, from a memory comprised by the sensor device, a configuration server identifier identifying a configuration server and a sensor identifier identifying the sensor device, connecting, through the wide area network, to the configuration server using the configuration server identifier and sending the sensor identifier to the configuration server.

## Description

### TECHNICAL FIELD

The various aspects and embodiments thereof relate to configuration of a monitoring device for sensing objects on a shelf of a shop gondola. Other aspects relate to initialisation of a data processing device for processing data received from the monitoring to allow inventory management.

### BACKGROUND

Inventory management systems are known from various publications. Items on a shelf in a gondola may be sensed or detected using cameras, proximity sensors, pressure sensors, light sources and detectors and other methods. Such systems are centrally controlled and connected to a server for processing the data.

### SUMMARY

It is preferred to provide a convenient method of initialisation of a device for monitoring items in a storage space on or above a shelf and a method of processing data received from the monitoring device such that it may be used by a user in a practical way.

A first aspect provides a method of configuring a sensor device for detecting stock in a shop gondola. The method comprises operating a sensor local wireless network module comprised by the sensor device, receiving, through the sensor's local wireless network module, shop network details for connecting to a shop local wireless network module and connecting to the shop local wireless network module using the shop network details. The method further comprises connecting, through the shop local wireless network module, to a wide area network, retrieving, from a memory comprised by the sensor device, a configuration server identifier identifying a configuration server and a sensor identifier identifying the sensor device, connecting, through the wide area network, to the configuration server using the configuration server identifier and sending the sensor identifier to the configuration server.

This method allows for swift configuration of the sensor device. The shop network details, like the SSID of a router, a username, a password, other, or a combination thereof may be provided to the sensor device by means of a personal digital assistant like a telephone, a laptop or a tablet computer. Network data for connecting to the sensor wireless local wireless network module may be provided written on the sensor device - or not required as the network device broadcasts a public network identifier, identifying a network access point that may be accessed without further credentials - but other implementations may be envisaged as well.

With the personal digital assistant connected to the sensor device, access data like a network identifier and/or login credentials of a local network in the shop may be provided. The local network may be hosted by a server or be facilitated by a router which, in turn, may provide direct access to a wide area network like the internet. The latter allows the sensor device to directly contact the configuration server.

An implementation of the first aspect comprises sensing objects and distances from the sensor to objects using a multitude of sensors comprised by the device, composing a sensor message comprising the sensor identifier and values of distances sensed by the sensors and sensing Sending the sensor message to the configuration server.

With this implementation, information is provided related to stock stored in the vicinity of the sensor device, for example, above, below or adjacent (behind, in front of or next to) the sensor device. This data may be used for determining stock available in a shelf space.

A second aspect provides, in a configuration server, a method of processing gondola stock sensor data. The method comprises receiving, from a sensor device, a sensor device identifier identifying a sensor device, looking up a shop identifier, using the sensor device identifier in an electronic memory comprised by the configuration server and sending a configuration request to a shop server, using the shop identifier. The configuration data is received from the shop server and the configuration data is stored with the in the electronic memory.

this aspect provides the configuration server with data sufficient to determine stock at a particular location or in a particular space under surveillance by the sensor device, once sensor data is received from the sensor device. The sensor device may be implemented in a simple, one size fits all configuration; combined with the configuration data, the sensor data may be used to reconstruct an amount of stock or even a three-dimensional representation of stock. With the shop identifier, the stock may be related to a particular shop, which makes restocking more convenient.

An implementation of the second aspect further comprises receiving a sensor device connection request from a personal digital assistant, receiving a further sensor device identifier from the person digital assistant and sending device access data to the personal digital assistant. A connection flag may be received from the sensor device comprising the sensor device identifier and the shop identifier is looked up in response to receiving the connection flag and the sensor device identifier.

The further sensor identifier may be the same or different from the sensor identifier and may be comprised by the connection request, for example as a addition to an http protocol address. The personal may generate the connection request from a QR code or other bar code or otherwise visually available code - even in text - that may be provided on the sensor device or on packaging thereof. The code may be scanned and the personal digital assistant can directly and optionally automatically connect to the server. In turn, the server is aware that the applicable sensor device - preferably uniquely identified by the further identifier - will be used shortly and will come on line shortly. Furthermore, with the personal digital assistant sending the connection request, the sender and optionally location thereof - which shop - may be know as well and any identifier of the sensor device may directly be coupled to the particular store or another item or person coupled to the store. Additionally, this implementation makes connecting the sensor device more convenient, as the personal digital assistant is provided with access data to the sensor device to facilitate automatically connecting the personal digital assistant and the sensor device for providing logon credentials to the local shop network and with that, to the a WAN.

In various implementations, the configuration data may comprises data on items stored in the area within a detection range or detection space of the sensor device, like dimensions, size, type of products, maximum stack height, data on the storage space, like gondola number, shelf number, location on a shelf, shelf space data like height, depth, width of the storage space under surveillance, other, or any combination thereof. This data may be used to reconstruct a number of items available in the storage space, a three-dimensional reconstruction of how items are stored in the storage space, any further data on items in the storage space, or a combination thereof.

In another implementation, the method comprises retrieving a product threshold value from an electronic memory comprised by the configuration server, comparing the product amount to the product threshold value and issuing a warning message if the product amount is equal to or less than the product threshold value. this embodiment is advantageous, as any shopkeeper or shop employee may be warned in case stock runs low and restocking may be required.

A third embodiment provides a sensor device. The sensor device comprises an array of sensors arranged to sense a distance between the sensor and an object, a sensor local wireless network module arranged to: receive shop network details for connecting to a shop local wireless network module, connect to the shop local wireless network module using the shop network details, connect, through the shop local wireless network module, to a wide area network. The device further comprises an electronic memory, a processing unit arranged to retrieve, from the electronic memory, a configuration server identifier identifying a configuration server and a sensor identifier identifying the sensor device. In this device, the sensor local wireless network module is further arranged to connect, through the wide area network, to the configuration server using the configuration server identifier; and send the sensor identifier to the configuration server.

A fourth embodiment provides a configuration server comprising a communication module arranged to receive, from the sensor device according to the third aspect, a sensor device identifier identifying the sensor device, an electronic memory and a processing unit. The processing unit is arranged to look up a shop identifier, using the sensor device identifier in an electronic memory comprised by the configuration server, send, using the communication module, a configuration request to a shop server, using the shop identifier, receive, using the communication module, configuration data from the shop server; and store the configuration data with the in the electronic memory.

A fifth embodiment provides a computer program product comprising computer executable code allowing a computer, when the code is loaded in the memory, to execute the method according to the first aspect.

A sixth embodiment provides a computer program product comprising computer executable code allowing a computer, when the code is loaded in the memory, to execute the method according to the second aspect.

### BRIEF DESCRIPTION OF THE DRAWINGS

The various aspects and embodiments thereof will now be elucidated in further detail in conjunction with drawings. In the drawings,
Figure 1 shows a shelf monitoring system;

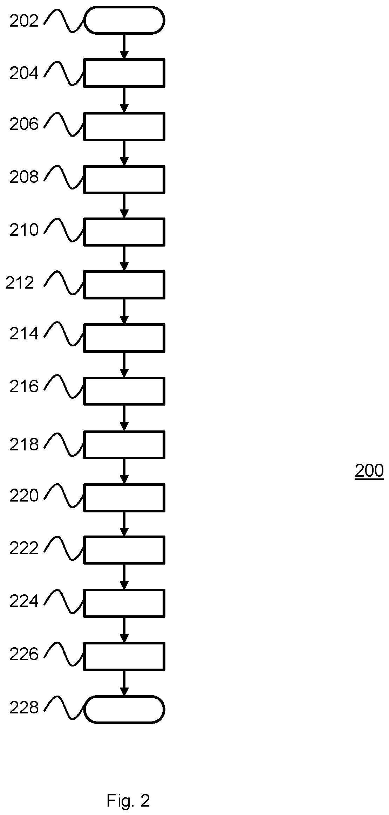

Figure 2 shows a first flowchart as an implementation of the first aspect;
Figure 3 shows a second flowchart as another implementation of the first aspect; and

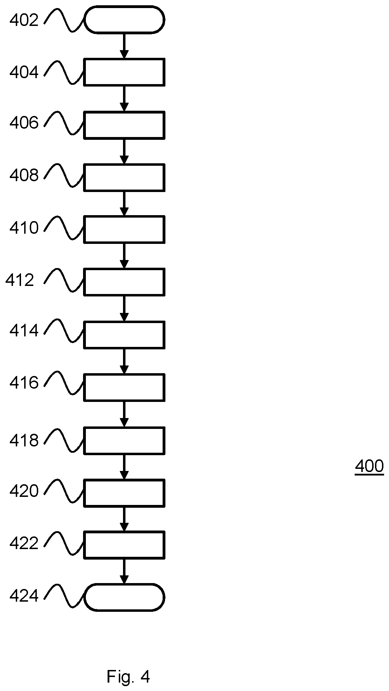

Figure 4 shows a third flowchart as an implementation of the second aspect.

### DETAILED DESCRIPTION

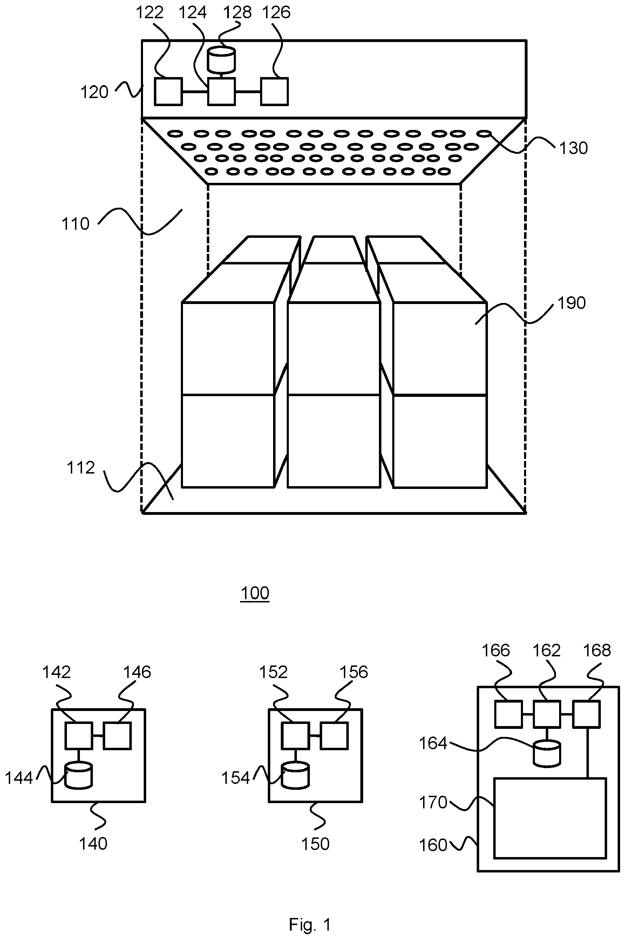

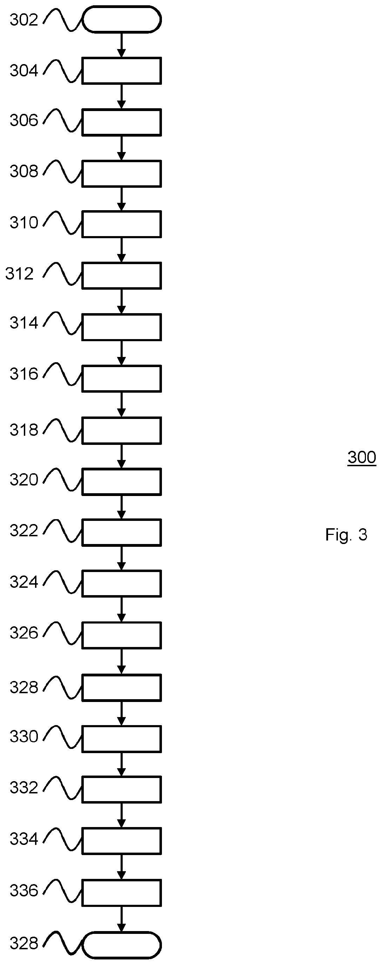

Figure 1 shows a shop shelf monitoring device 120 as an implementation of the third aspect. The monitoring device 120 forms part of an inventory management system 100. The monitoring device 120 comprises multiple ranging sensors 130. The ranging sensors 130 are - optionally - arranged on or in the monitoring device 120 in lines, preferably about 10 centimetres apart. It is well noted that other distances may be used as well, ranging from 1 centimetre to 20 centimetre, including values in between. Furthermore, the ranging sensors 130 may be located at specific gridlines. Alternatively, ranging sensors 130 on adjacent lines are provided in a staggered way, as for example depicted by Figure 3.

The monitoring device 120 is provided above a shelf 112 in a gondola that is arranged to carry items 190 for sale in a shop that are arranged in a storage space 110 between the shelf 112 and the monitoring device 120. The ranging sensor 130 are arranged to provide a data signal having one or more values, which values provide an indication of a distance between the sensor 130 and the items 190. The ranging sensors 130 may comprise, without limitation, time-of-flight sensor, stereoscopic optical sensors, ultrasound ranging sensors, other sensors having similar or equivalent functionality or a combination thereof. The ranging sensors 130 may comprise a receiver as well as a transmitter or only one of these.

The monitoring device 120 comprises one or more sensor processors 122, a central processing unit 124, a shelf communication module 126 and a memory module 128. The sensor processor 122 received raw data from the ranging sensor 130 and converts the raw data to one or more values that provide an indication of the distance between the items 190 and the ranging sensors 130. For example, in case time-of-flight sensors are used, the sensor processors 122 convert, per sensor 130, the time between emission of an optical signal and receipt of a reflected optical signal to a value providing indication of the distance. In case stereoscopic optical sensors are used, the sensor processors 122 comprise image processors for determining the distance.

The central processing unit 124 receives the processed sensor data for some or, preferably, all of the ranging sensors 130 and constructs a data message comprising these value.

The shelf communication unit 126 is arranged to send the data message with sensor data as prepared by the central processing unit 124 to a shop server communication module 146 of a shop server 140 located in or nearby the shop. The shop server 140 may be implemented as a full fledged computing device like a personal computer or a blade server, with a network routing functionality. Alternatively, the shop server 140 is a network router, providing a gateway functionality between the wireless local area network (WLAN) in the shop and a wide area network (WAN) like the internet.

The communication of the sensor data message preferably takes place using at least one of WiFi (IEEE 802.11), any standard for cellular communication like WCDMA, GPRS, 3G, HSDPA, LTE, LoRa, LTE cat-m1, LTE NB-IoT or any other type of eM2Mtc (enhanced machine-machine type communication), wired networks and applicable protocols like xDSL, other or a combination thereof. Over such networks, data is preferably transmitted using the IP protocol.

The shop server 140 receives the data message and processes the data using shop server central processing unit 142 and, preferably, a computer program stored on a shop server memory module 144 comprised by the shop server 140. The shop server communication module 146 is arranged to communicate with multiple sensor devices 120 located in the shop.

The shop server communication module 146 is also arranged to send any data received by the shop server 140 to a data processing server 150 as a back end server. This may be data received from one or more shop shelf monitoring devices 120. The data processing server 150 receives the data sent by they shop server communication module 146 by means of a processing communication module 156 and processes the data by means of a processing server processing unit 152. In case the shop server 140 is embodied as a network router providing a gateway functionality between a LAN and a WAN, the shelf communication unit 126 communicates directly with the data processing server 150, passing by the shop server 140 as a gateway.

The processing of the data is elucidated below. The processing server further comprises a processing memory 154 for storing received data, processed data and other data, for example for programming the processing server processing unit 152. The processing of data by the data processing unit 142 is discussed in further detail below.

The inventory management system 100 further comprises a personal digital assistant 160, which may be a device like a handheld tablet computer, a laptop computer, a desktop computer, an electronics wearable device or similar or equivalent. A communication module 166 comprised by the personal digital assistant is arranged to receive data from the processing communication module 156. The received processed data may be further processed by means of a user central processing unit 162 and the data thus processed is provided to a user rendering module 168 for providing data ready to display at an electronic display device 170 like an LCD screen or optical data projector. In one embodiment, the shop server 140 and the personal digital assistant 160 are one and the same device. In another embodiment, the shop server 140 is a device different from the personal digital assistant 160.

The functionality of the inventory management system 100 and the various devices comprised thereby will be elucidated in conjunction with a first flowchart 200 a second flowchart 300 and a third flowchart 400. The first flowchart 200 depicts an embodiment of the first aspect as a method that may be carried out by the monitoring device 120. The second flowchart 300 depicts an embodiment alternative to that depicted by the first flowchart 100, although various parts of the two flowcharts may be interchanged or added. A third flowchart 400 shows an embodiment of the second aspect as a method that may be carried out by the data processing server 150.

First, the second flowchart 200 will be discussed in further detail. The various parts of the first flowchart 200 may be summarised as follows:
- 202: initialise monitoring device 120
- 204: broadcast network ID
- 206: receive connection request from user device
- 208: connect to user device
- 210: receive WLAN data from user device
- 212: connect to WLAN
- 214: retrieve data processing server data
- 216: connect to WAN
- 218: connect to data processing server
- 220: send monitoring device ID
- 222: monitor storage space 110
- 224: compose monitoring data message
- 226: send monitoring data message to data processing server
- 228: end

The procedure starts in a terminator 202 in which the monitoring device 120 is switched on and initialises the various components. Subsequently, in step 204, an identifier identifying the shelf communication module 126. The identifier may be an SSID of a wifi connection point provided by the shelf communication module 126. The SSID may be received by means of a user device like the personal digital assistant 160. In step 206, a connection request is received from the user device. Such user request may comprise a username, a password, further data or any combination thereof.

In step 208, the shelf communication module 126 connects to the user device and in step 210, WLAN data is received from the user device. The WLAN data may comprise a username, a password, further data or any combination thereof. Preferably, the WLAN data relates to a wireless local area network provided in the shop in which the gondola carrying the shop shelf monitoring system 120 is provided and to which the shop server 140 is connected..

In step 212, the shop shelf monitoring system 120, via the shelf communication module 126, connects to the wireless local area network and with that, to the shop server 140 and in particular to the shop server communication module 146. In this embodiment, the shop server 140 acts as a gateway to a wide area network, like the internet or a larger virtual private network suitable for implementation of the various aspects. in step 214, the shop shelf monitoring system 120 retrieves data of the data processing server 150 from the memory module 128. The retrieved data may comprise an IP address, a server domain name, a user name, a password, other, or any combination thereof.

In step 216, the shop shelf monitoring system 120 connects to the wide area network through the shop server 140 and looks up the data processing server 150. In step 218, the shop shelf monitoring system 120 connects to the data processing server 160 and the processing communication module 156 in particular. With the connection between the shop shelf monitoring system 120 and the data processing server 150 established, the shop shelf monitoring system 120 sends identification data to the data processing server 150 in step 220. The identification data comprises a serial number, preferably a unique serial number, a geographical location that may be obtained by a geolocation module (not shown) comprised by the shop shelf monitoring device 120, other, or a combination thereof. It is noted that a serial number may comprise alphanumerical characters or other characters.

With the shop shelf communication device 120 and the data processing server 150 having thus established a connection and exchanged identifiers that uniquely identifies the shop shelf monitoring device 120, the shop shelf monitoring device 120 is ready for operation. In step 222, the shop shelf monitoring device 120 receives data from the ranging sensors 130 and composes, for example using the sensor processor 122, a monitoring data message in step 224. The monitoring data message may comprise ranging data obtained by the ranging sensors 130, an identifier identifying the shop shelf monitoring device 120, other, or any combination thereof. The ranging data preferably comprises one or more values per sensor 130 indicating a distance between each or in any case at least one of the sensors 130 and at least one item 190.

In step 226, the data message is sent to the data processing server 150 and the procedure ends in a terminator 228. The steps 222, 224 and 226 may be repeated at particular intervals, at particular events detected by the sensors 130, at other moments or any combination thereof.

As indicated above, The second flowchart 300 depicts an alternative implementation of the first aspect. The various parts of the second flowchart may be summarised as follows:
- 302: start procedure
- 304: scan QR code
- 306: access address in QR code
- 308: provide account information
- 310: register device as connected
- 312: couple device to account information
- 314: send device access data to personal digital assistant
- 316: receive device access data
- 318: connect to device with received device access data
- 320: send local network access data to device
- 322: device connects to local network
- 324: device connects to server
- 326: server sends request for configuration data
- 328: personal digital assistant receives configuration request
- 330: personal digital assistant requests configuration data
- 332: personal digital assistant receives configuration data
- 334: personal digital assistant sends configuration data
- 336: server receives configuration data
- 338: end procedure

The procedure starts in a terminator 302 in which the various parts of the system may be initialised. In step 304, the personal digital assistant 160 scans a QR code provided on the device 120 in step 304 and extracts a string of information from the data. For the scanning, the personal digital assistant 160 preferably comprises a camera as for example most smartphones and tablet computers do.

In step 306, the personal digital assistant 160 addresses the data processing server 150 using the string extracted from the QR code. Preferably, the QR code provides address data unique to the specific device 120. By addressing or accessing the data processing server 150 using the unique address data - preferably a URL, uniform resource locator and more preferably a URL with an http - hypertext transfer protocol - protocol indicator - the specific device 120 may be identified from the access request using the string of data embedded in the QR code on the device 120. With the access request or addressing, the personal digital assistant 160 preferably also provides account data related to the shop and/or a shop keeper or shop servant related the shop, in step 308. Such data may be provided separately, or, alternatively or additionally, by providing an origin address like the IP address or telephone number of the personal digital assistant 160.

Based on the received data about the specific device 120, the data processing server 150 registers the device 120 as being connected or at least as available and placed in step 310. In step 312, the device 120 is coupled to account information received together with the access request identifying the device 120 as discussed above.

With the device 120 being registered and coupled to the personal digital assistant 160 or an account related to the shop in which the device 120 is provided, the coupling being provided in the data processing server 150, data is generated or looked up for the personal digital assistant 160 to connect to the device 120, in step 314, the device access data is sent to the personal digital assistant 160, by the data processing server 150.

The data sent by the server is received by the personal digital assistant 160 in step 316. In step 318, the device access data is used by the personal digital assistant 160 to connect to the device 120. In step 320, the personal digital assistant 160 is connected to the device 120 and provides the device 120 with data, preferably a network identifier like an SSID, a username, a password, other data or a combination thereof to connect to the local network, for example to the shop server 140, preferably embodied as a network router.

Having received the local network credentials, the device connects to the local network and the shop server 140 in step 322, optionally after rebooting the device 120. In step 324, the device 120 connects to the data processing server 150. With the device 120 hailing the data processing server 150, the data processing server 150 receives a confirmation that the device 120 is ready for communication and operation. Yet, for the whole system to be usefully operational, configuration data is required on how items 190 are provided under the device 120.

In step 326, the data processing server 150 sends the personal digital assistant 160 a request for configuration data and product or shelf configuration data in particular, as discussed above in conjunction with the first flowchart 200. The data request is received by the personal digtal assistant 160 in step 328 and in step 330, the personal digital assistant 160 asks a user to provide configuration data. In step 332, the personal digital assistant 160 receives the configuration data from a user. In an alternative implementation, the configuration data is obtained automatically, for example from a local computer in the shop or a central server carrying data from multiple shop of a retail chain.

In step 334, the personal digital assistant 160 sends the configuration data to the data processing server 150 and the data is received in step 336. The received data may be stored in the data processing server 150 and employed as discussed below in conjunction with the third flowchart 400. The procedure ends in the terminator 338.

Now, the third flowchart 400 will be discussed in further detail. The various parts of the third flowchart 400 may be summarised as follows:
402 initialise data processing server
404 receive connection request for monitoring device
406 connect to monitoring device
408 receive monitoring device ID
410 look up monitoring device data
412 send configuration device to personal digital assistant
414 receive configuration data
416 receive monitoring data message
418 process monitoring data in accordance with configuration data
420 reconstruct 4D representation of stock
422 send processed data to personal digital assistant
424 end

The process depicted by the second flowchart 400 starts in a terminator 402 in which the data processing server 150 is switched on and initialised. In step 404, a connection request is received from the shop shelf monitoring system 120 and in step 406, the data processing server 150 connects to the shop shelf monitoring device 120 - as sent out in step 218.

In step 408, the data processing server 150 receives data identifying the shop shelf monitoring device 120, as sent out in step 220 above. in step 410, the data processing server looks up, by means of the processing server processing unit 152 and in the processing memory 154, data related to the shop shelf monitoring device 120 using the received identification data. The related data preferably comprises at least one of a shop identifier identifying a shop in which the shop shelf monitoring device 120 is placed, an identifier of at least one personal digital assistant 160 related to the applicable shop, a particular gondola in which the shop shelf monitoring device 120 is provided, a particular location in that gondola, a product identifier of products provided on the shelf 112, other, or any combination thereof.

Based on the retrieved data, the data processing server 150, by means of the processing communication module 156, sends a communication to the personal digital assistant 160 with a request for information how a shopkeeper of the shop has configured the shop shelf monitoring device 120, in step 412. The shopkeeper is to enter the configuration data in the personal digital assistant 160. The configuration data may comprised any of a product identifier identifying ate item 190, dimensions of the item 190, a location of the shop shelf monitoring device 120 relative to the shop, the gondola or the shelf 112, a scheme in accordance with which the items 190 may be stacked on the shelf 190, a preferred minimum amount of items 190 to be present on the shelf 112, other, or any combination thereof.

The personal digital assistant sends the configuration data, by means of the communication module 166, to the data processing server 150 that receives the configuration data by means of the processing communication module 156 in step 414. The configuration data received may be stored in the processing memory 152. Next, in step 416, the data processing server 150 receives a monitoring data message as composed in step 224 and sent out in step 226.

In step 418, the data comprised by the received monitoring data message is processed in accordance with at least part of the configuration data received. More in particular, based on at least one of the ranging data in the monitoring data message, locations of the sensors 130 in the shop shelf monitoring device 120, dimensions of the items 190, a stacking scheme of the items 190, other data or any combination thereof, an amount of items 190 on the shelf 112 or in the storage space 110 is determined.

In step 420, a three-dimensional representation of the stack or stacks of items 190 is reconstructed. With information on distances between the sensors 130, dimensions of the items 190 in three dimensions, space between stacks, other information or any combination thereof, plus data provided in one or more monitoring data messages, the stack of items 190 as for example shown in Figure 1 may be reconstructed. Hence, the processing of data in the sensor data messages, the configuration data and optional further data may provide as a result a number of items 190 available in the storage space 110 on the shelf 112, a three dimensional representation of how the items 190 are provided in the storage space, other results providing information on items 190 in the storage space 190, whether the amount of items 190 is below a particular threshold or any combination thereof.

In step 422, the processed data is sent to the personal digital assistant 160. The data may be further processed by the personal digital assistant. For example, the amount of items 190 available in the storage space 110 may be compared to a threshold stored in a user memory module 164, or the three-dimensional representation of the set of items may be reconstructed using the user central processing unit 162. The processed data sent may thus be a three dimensional representation of how the items 190 are provided in the storage space, other results providing information on items 190 in the storage space 190, whether the amount of items 190 is below a particular threshold, a warning message the amount of items 190 is below a particular threshold or any combination thereof.

## Claims

1. Method of configuring a sensor device for detecting stock in a shop gondola, the method comprising:
operating a sensor local wireless network module comprised by the sensor device;
receiving, through the sensor's local wireless network module, shop network details for connecting to a shop local wireless network module;
connecting to the shop local wireless network module using the shop network details;
connecting, through the shop local wireless network module, to a wide area network;
retrieving, from a memory comprised by the sensor device, a configuration server identifier identifying a configuration server and a sensor identifier identifying the sensor device;
connecting, through the wide area network, to the configuration server using the configuration server identifier;
sending the sensor identifier to the configuration server.

2. Method according to claim 1, further comprising
sensing objects and distances from the sensor to objects using a multitude of sensors comprised by the device;
composing a sensor message comprising the sensor identifier and values of distances sensed by the sensors;
sending the sensor message to the configuration server.

3. Method according to claim 1 or claim 2, wherein the shop network details comprise at least one of the following:
a network identifier identifying the shop network;
a username;
a password.

4. In a configuration server, method of processing gondola stock sensor data, comprising:
receiving, from a sensor device, a sensor device identifier identifying a sensor device;
looking up a shop identifier, using the sensor device identifier in an electronic memory comprised by the configuration server;
sending a configuration request to a shop server, using the shop identifier; receiving configuration data from the shop server;
storing the configuration data in the electronic memory.

5. Method according to claim 4, further comprising:
receiving a sensor device connection request from a personal digital assistant;
receiving a further sensor device identifier from the person digital assistant;
sending device access data to the personal digital assistant;
receiving a connection flag from the sensor device comprising the sensor device identifier;
wherein the shop identifier is looked up in response to receiving the connection flag and the sensor device identifier.

6. Method according to claim 5, wherein the further sensor device identifier is comprised by the connection request.

7. Method according to claim 5 or claim 6, wherein the further sensor device identifier is equal to the sensor device identifier.

8. Method according to any of the claims 4 to 7, wherein the configuration data comprises at least one of:
a gondola location identifier;
a product identifier;
a set of product dimensions; and
a product stacking plan.

9. Method according to claim any of the claims 4 to 8, further comprising:
receiving sensor device data from the sensor device;
processing the sensor device data in accordance with the configuration data;
determining, based on the processing, a product amount indicating an amount of products stored in an area monitored by the sensor device.

10. Method according to claim 9, further comprising:
retrieving a product threshold value from an electronic memory comprised by the configuration server;
comparing the product amount to the product threshold value;
issuing a warning message if the product amount is equal to or less than the product threshold value.

11. Method according to claim 9 or claim 10, further comprising, based on the processing, creating a three-dimensional representation of products as located in the area monitored by the sensor device.

12. Method according to any of the claims 9 to 11, further comprising sending at least one of the sensor device data and data based on the processing to the shop server.

13. Sensor device comprising:
an array of sensors arranged to sense a distance between the sensor and an object;
a sensor local wireless network module arranged to:
receive shop network details for connecting to a shop local wireless network module;
connect to the shop local wireless network module using the shop network details;
connect, through the shop local wireless network module, to a wide area network;
an electronic memory;
a processing unit arranged to retrieve, from the electronic memory, a configuration server identifier identifying a configuration server and a sensor identifier identifying the sensor device;
wherein the sensor local wireless network module is further arranged to:
connect, through the wide area network, to the configuration server using the configuration server identifier; and
send the sensor identifier to the configuration server.

14. Configuration server comprising:
a communication module arranged to receive, from the sensor device according to claim 13, a sensor device identifier identifying the sensor device;
an electronic memory;
a processing unit arranged to look up a shop identifier, using the sensor device identifier in an electronic memory comprised by the configuration server;
send, using the communication module, a configuration request to a shop server, using the shop identifier;
receive, using the communication module, configuration data from the shop server; and
store the configuration data with the in the electronic memory.

15. Computer program product comprising computer executable code allowing a computer, when the code is loaded in the memory, to execute the method according to any of the claims 4 to 12.
